Europäisches Patentamt

European Patent Office

Office européen des brevets

(19)

(11) Veröffentlichungsnummer: **0 214 646**
**B1**

(12) **EUROPÄISCHE PATENTSCHRIFT**

(45) Veröffentlichungstag der Patentschrift:
**31.01.90**

(51) Int. Cl.⁴: **F 02 M 31/16**, F 02 M 31/12 //
F02M37/22

(21) Anmeldenummer: **86112438.6**

(22) Anmeldetag: **09.09.86**

(54) **Vorrrichtung zum Anwärmen von Flüssigkeiten, insbesondere zum Vorwärmen von flüssigen Brenn- oder Kraftstoffen.**

(30) Priorität: **10.09.85 DE 3532243**

(43) Veröffentlichungstag der Anmeldung:
**18.03.87 Patentblatt 87/12**

(45) Bekanntmachung des Hinweises auf die Patenterteilung:
**31.01.90 Patentblatt 90/5**

(84) Benannte Vertragsstaaten:
**AT BE FR GB IT NL SE**

(56) Entgegenhaltungen:
**DE-U- 8 513 541**
**FR-A- 2 478 204**
**FR-A- 2 501 790**
**GB-A- 223 566**
**NL-B- 91 041**
**US-A- 1 673 568**
**US-A- 4 329 231**
**US-A- 4 498 446**
**US-A- 4 603 244**

(73) Patentinhaber: **Lacrex Brevetti S.A., Via Eco 53,
CH-6644 Orselina/TI (CH)**

(72) Erfinder: **Pasbrig, Max, Via Eco, CH-6644 Orselina (CH)**

(74) Vertreter: **Hain, Leonhard, Dipl.-Ing., Tal 18/IV,
D-8000 München 2 (DE)**

## Beschreibung

Die Erfindung betrifft eine Vorrichtung zum Anwärmen bzw. Vorwärmen von flüssigen Brenn- oder Kraftstoffen in einem Filtertopf, insbesondere für Verbrennungskraftmaschinen, gemäß dem Oberbegriff des Patentanspruches 1.

Bei einer bekannten Heizvorrichtung für Kraftstoff-Filter (FR-A-2 478 204) ist eine elektrische Widerstandsheizung in einem flexiblen Band untergebracht, das einen Teil des Filtertopf-Zylinders manschettenartig umschließt und mittels einer Schraubspange an den Bandenden darauf befestigt ist. Dieses flexible Heizband kann so unterschiedlichen Filterformen und -größen angepaßt werden. Allerdings beschränkt dieser Vorteil die Anwärmvorrichtung auf einen Teilabschnitt des Filtergehäuses, so daß auch nur eine begrenzte Wärmeübertragung stattfinden kann. Zudem bleibt auch im Bereich der Schraubspange ein Gehäuseteil frei. Um dieses Heizband nach außen zu isolieren, kann es mittels einer nachträglich aufgebrachten Binde aus wärmeisolierendem Material abgedeckt sein. Die Anbringung dieser Anwärmvorrichtung an einem Kraftstoff-Filter ist aufwendig und umständlich, da zwei voneinander getrennte Teile nacheinander und unter Verwendung eines Werkzeuges befestigt werden müssen. Für Kraftstoff-Filter wurde ferner schon eine topfförmige Wärmeverkleidung bekannt (US-A-4 329 231). Dieser Isoliertopf kann von Hand auf entsprechend geformte Filtergehäuse aufgeschoben und davon wieder abgezogen werden. Dieser aus Kunststoff bestehende Isoliertopf schützt allenfalls gegen eine rasche Wärmeabgabe aus dem Kraftstoff-Filter. Eine Wärmeübertragung auf den Filtertopf zum An- bzw. Vorwärmen des im Filter befindlichen Kraftstoffes ist damit nicht möglich.

Der Erfindung liegt daher die Aufgabe zugrunde, eine Anwärmvorrichtung für einen Kraftstoff-Filter zu schaffen, die eine intensive Wärmeübertragung auf einen Filtertopf gewährleistet, den gesamten Filtertopf gegen Wärmeverluste schützt, insbesondere einfach im Aufbau und daher ebenfalls einfach, leicht und auch nachträglich am Filtertopf anbringbar ist.

Diese Aufgabe wird mit einer Vorrichtung gemäß dem Oberbegriff des Patentanspruches 1 erfindungsgemäß durch die kennzeichnenden Merkmale dieses Patentanspruches gelöst.

Vorteilhafte Weiterentwicklungen der Erfindung sind in Unteransprüchen beansprucht.

Durch einen direkten Kontakt eines Flächenheizelementes mit dem zu erwärmenden Filtertopf erfolgt eine intensive und verlustarme Wärmeübertragung auf den gesamten zylindrischen Teil des Filtertopfes. Der den gesamten Filtertopf abdeckende Isoliermantel verhindert mit seiner vollen Wanddicke Wärmeverluste nach außen. Dadurch, daß das Flächenheizelement mit dem Isoliermantel zu einer Körpereinheit verbunden ist, entsteht ein einfacher Aufsetztopf als Anwärmvorrichtung, der sich leicht und auch ohne Hilfsmittel über einen Filtertopf schieben läßt.

Besteht dieser Aufsetztopf aus wenigen Segmentschalen, dann ermöglicht diese Schalenunterteilung auch eine gewisse Anpassung an Fertigungstoleranzen am Filtertopf. Durch eine entsprechende Umreifung des unterteilten Aufsetztopfes kann ein sattes Anliegen der Heizfläche am Filtertopf erreicht werden. Schließlich kann ein unterteilter Aufsetztopf mit entsprechenden Aussparungen an einem Filtertopf mit ringförmigen oder radial abstehenden Erhebungen angebracht werden. Da dieser einfache und preiswerte Aufsetztopf jeder Filteroberfläche angepaßt werden kann, eignet er sich besonders gut als Zusatzgerät zum Einsatz an handelsüblichen Kraftstoff-Filtern.

Die Erfindung wird nachfolgend anhand eines Ausführungsbeispiels, das auch in der Zeichnung schematisiert dargestellt ist, näher beschrieben. Es zeigen:

Fig. 1 einen Vertikalschnitt nach der Linie I-I der Fig. 2 durch einen Aufsetztopf an einem Kraftstoff-Filter und

Fig. 2 einen Querschnitt nach der Linie II-II der Fig. 1 durch einen Isoliermantel.

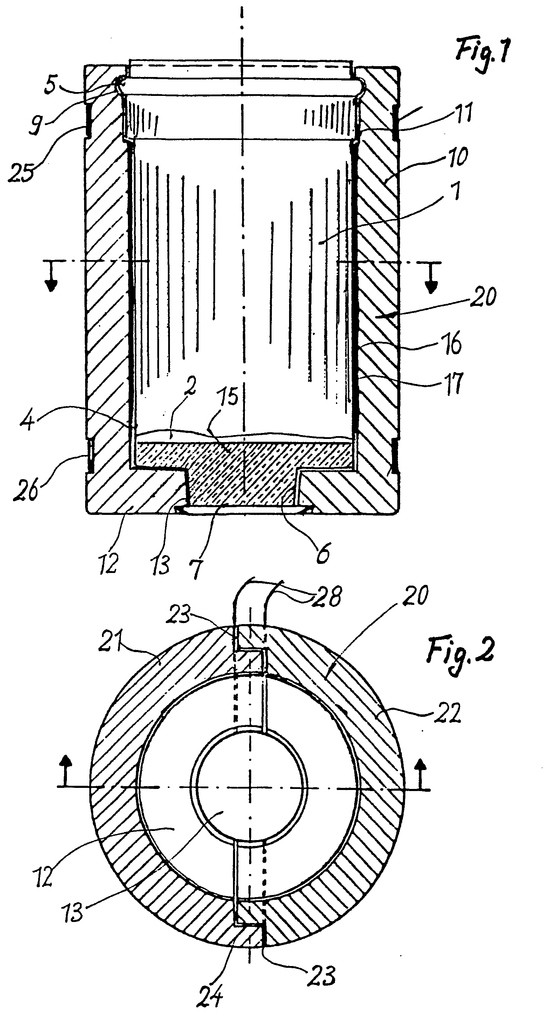

Mit 1 ist ein handelsüblicher Filtertopf für Dieselkraftstoff bezeichnet, der beispielsweise als Wechselfilter mit einem Wasserspeicherraum 2 ausgestattet ist. Dieser Wechselfilter ist an einem Anschlußkopf mit den Zu- und Abflußkanälen (nicht gezeichnet) für den Dieselkraftstoff auswechselbar befestigt. Eine geschlossene Filterwand 4 aus Metall umgibt eine innenliegende Filtereinrichtung (nicht sichtbar) flüssigkeitsdicht. Oben weist die Filterwand einen Ringwulst 5 und unten einen Ansatz 6 für eine Wasserablaßschraube (nicht gezeichnet) auf. Erfindungsgemäß ist der Filtertopf 1 von einem einen Außenmantel bildenden Isoliermantel 10 aus Kunstschaumstoff, wie Polyurethanschaum, umgeben. Der Mantelwerkstoff ist so verdichtet und die Manteloberflächen sind so geglättet, daß ein steifer, formbeständiger und weitgehend drucksicherer Mantelkörper vorliegt. Die Innenfläche 11 dieses Isoliermantels ist möglichst genau der Umfangsform des Filtertopfes angepaßt. Deshalb übergreift eine Ringnut 9 im Isoliermantel den Ringwulst 5 am Filtertopf und fixiert so den Isoliermantel gegen axiales Verschieben. Weist der Filtertopf eine Ablaßöffnung 7 auf, dann hat auch der Isoliermantelboden 12 eine entsprechende Aussparung 13. Sofern der Filter ohne Wasserabscheidung benutzt wird, kann auf die Ablaßöffnung ein zusätzlicher Deckel (nicht dargestellt), der die Aussparung 13 abschließt, aufgesetzt werden. Zum Ausfüllen des Wasserabscheideraumes 2 kann eine Kunststoffeinlage 15 eingelegt sein, wenn die Wasserabscheidung an anderer Stelle erfolgt. Möglichst auf voller Höhe des zylindrischen Abschnittes des Isoliermantels ist eine Heizfolie oder Heizmatte als Flächenheizelement 16 auf seine Innenfläche 11, z.B. durch Verklebung, aufgebracht. Weil der Isoliermantel genau der Filtertopfform angepaßt ist, kommt das Flächenheizelement zum dichten Anliegen an die Filterwand 4, so daß ein guter Wärmefluß vom Heizelement in das Filterinnere und damit zur durchströmenden Flüssigkeit gewährleistet wird. Das Flächenheizelement ist von einer Isoliermasse umgeben und folien- oder mattenförmig ausgebildet. Im aufgeklebten Zustand ist es ebenfalls formbeständig und zumindest an seiner inneren Kontaktfläche 17 auch berührungs- und zerreißfrei, so daß dieser aus Isoliermantel und Flächenheizelement bestehende Aufsetztopf 20 auch auf einen Behälter bzw. Filtertopf aufgeschoben werden kann. Das Aufbringen dieses Zusatzgerätes auf den Filtertopf läßt sich erleichtern, wenn es aus zwei oder mehreren Segmentschalen 21, 22 (Fig. 2) besteht. An den Stoßstellen 23 übergreifen sich die Anschlagkanten stufenförmig bei 24, so daß auch unter Berücksichtigung von Fertigungstoleranzen ein dichter Abschluß gesichert ist. Um diese Segmentschalen in einfacher Weise auf dem Filtertopf zu befestigen, sind ein oberes und ein unteres Ringband 25, 26 vorgesehen. Sind diese Ringbänder elastisch genug, dann können sie einfach über den Isoliermantel aufgezogen werden. Sollen Stahlbänder Verwendung finden, dann läßt sich die notwendige Umspannung durch ein Schneckengewinde erreichen. Die Anschlußleitungen 28 für das Heizelement 16 können an jeder geeigneten Stelle, zweckmäßig an der Stoßstelle 23, durch den Isoliermantel geführt sein.

Die Erfindung ist nicht auf das dargestellte Ausführungsbeispiel beschränkt; denn dieses erfindungsgemäße Zusatzgerät kann auch jedem anderen Flüssigkeitsbehälter angepaßt und daran angelegt sein. Der Isoliermantel 10 selbst könnte auch aus mehreren Isolierschichten bestehen, wie es auch möglich wäre, ihn nach außen noch durch einen Schutzmantel aus Metall oder dgl. zu schützen.

Wenn es sich beim gezeigten Aufsetztopf 20 um einen zylindrischen handelt, so schließt dies andere Querschnittsformen, wie rechteckige, quadratische oder ovale, nicht aus. Der Aufsetztopf könnte auch nur aus einem oder mehreren Plattenelementen bestehen, die auch zu einem Umfangsmantel zusammengesetzt werden können. Schließlich kann der Isoliermantel auch aus einem etwas flexiblen Isolierwerkstoff bestehen, so daß in Verbindung mit dem flexiblen Flächenheizelement ein anpassungsfähiger, jedoch formbeständiger Aufsetztopf entsteht.

**Patentansprüche**

1. Anwärm- oder Vorwärmvorrichtung von flüssigen Brenn- oder Kraftstoffen in einem Filtertopf (1), insbesondere für Verbrennungskraftmaschinen, mit einem einen zylindrischen Teilabschnitt des Filtertopfes abdeckenden, wärmeisolierenden Außenmantel (10) und einem inneren Flächenheizelement (16) mit Anschlußleitungen zu einer Stromquelle und einer am Filtertopf anliegenden Kontaktfläche sowie mit Befestigungseinrichtungen für die Befestigung der Vorrichtung am Filtertopf, dadurch gekennzeichnet, daß der Außenmantel ein formbeständiger, den ganzen Filtertopf (1) abdeckender Isoliermantel (10) ist, und an seiner zylindrischen Innenfläche (11) das Flächenheizelement (16) mit einer freien, berührungs- und zerreißfesten Kontaktfläche (17) angebracht ist, so daß Isoliermantel (10) und Flächenheizelement (16) einen auf den Filtertopf (1) aufbringbaren Aufsetztopf (20) bilden.

2. Vorrichtung nach Anspruch 1, dadurch gekennzeichnet, daß zwischen dem Flächenheizelement (16) und dem Isoliermantel (10) eine Reflektorfolie bzw. Reflektorschicht vorgesehen ist.

3. Vorrichtung nach Anspruch 1 oder 2, dadurch gekennzeichnet, daß der Isoliermantelboden (12) des Aufsetztopfes (20) mit einer Aussparung (13) für eine Abflußöffnung (7) des Filtertopfes versehen ist.

4. Vorrichtung nach einem der Ansprüche 1 bis 3, dadurch gekennzeichnet, daß der Isoliermantel (10) eine Ringnut (9) zum Übergreifen eines Ringwulstes (5) des Filtertopfes (1) aufweist.

5. Vorrichtung nach einem der Ansprüche 1 bis 4, dadurch gekennzeichnet, daß der Isoliermantel (10) aus Kunstschaumstoff besteht.

6. Vorrichtung nach einem der Ansprüche 1 bis 5, dadurch gekennzeichnet, daß der Aufsetztopf (20) mindestens von zwei entlang von Mantellinien geteilten und miteinander verbindbaren Segmentschalen (21, 22) gebildet ist.

7. Vorrichtung nach Anspruch 6, dadurch gekennzeichnet, daß die Segmentschalen (21, 22) mittels Umreifungen auf den Filtertopf (1) aufspannbar sind.

8. Vorrichtung nach Anspruch 6 oder 7, dadurch gekennzeichnet, daß die Segmentschalen (21, 22) mittels Ringbändern (25, 26) am Filtertopf gehalten sind.

**Claims**

1. Device for heating or pre-heating of liquid heating fuel or combustible fuel in a filter pot (1), in particular for combustion engines, including a heat-insulated external casing (10) which embraces a cylindrical section of the filter pot, and an internal surface-heating element (16) with connecting leads to a power supply, and a contact surface abutting against the filter pot as well as fixing means for fixing the device to the filter pot, characterised in that the external casing is a rigid insulating casing (10) embracing the entire filter pot (1); and that to its cylindrical interior surface (11) is fitted the surface-heating element (16) by way of a free, touch- and tear-resistant contact surface (17) so that the insulating casing (10) and the surface-heating element (16) form a supplementary pot (20) to be placed onto the filter pot (1).

2. Device according to claim 1, characterised in that a reflecting foil or a reflecting layer respectively is provided between the surface-heating element (16) and the insulating casing (10).

3. Device according to claim 1 or 2, characterised in that the bottom (12) of the insulating casing of the supplementary pot (20) is provided with a cut-out (13) for an outlet opening (7) of the filter pot.

4. Device according to one of the claims 1 to 3, characterised in that the insulating casing (10) has a peripheral groove (9) to engage a circular lip (5) of the filter pot (1).

5. Device according to one of the claims 1 to 4, characterised in that the insulating coat (10) is of plastics foam material.

6. Device according to one of the claims 1 to 5, characterised in that the supplementary pot (20) comprises at least two shell segments (21, 22) which are separated along the line of the casing and connectable to each other.

7. Device according to claim 6, characterised in that the shell segments (21, 22) are attachable around the filter pot by way of peripheral tapes.

8. Device according to claim 6 or 7, characterised in that the shell segments (21, 22) are held onto the filter pot by way of peripheral tapes (25, 26).

## Revendications

1. Dispositif de chauffage ou de préchauffage de combustibles ou carburants liquides dans une cuve de filtrage (1), en particulier pour des machines à combustion interne, comprenant une enveloppe externe (10) thermo-isolante qui recouvre une section partielle cylindrique de la cuve de filtrage, et un élément de chauffage par la surface, interne (16) présentant des lignes de raccordement à une source de courant et une surface de contact en appui sur la cuve de filtrage, ainsi que des dispositifs de fixation pour la fixation du dispositif sur la cuve de filtrage, caractérisé en ce que l'enveloppe externe est une enveloppe isolante (10) qui est de forme stable et qui recouvre la cuve de filtrage (1) entière, et en ce que l'élément de chauffage par la surfave (16) est appliqué sur sa face interne cylindrique (11) par une surface de contact (17) libre et résistant au contact et à la déchirure, de façon que l'enveloppe isolante (10) et l'élément de chauffage par la surface (16) forment une cuve montable (20) applicable sur la cuve de filtrage (1).

2. Dispositif suivant la revendication 1, caractérisé en ce qu'une feuille réflectrice ou couche réflectrice est prévue entre l'élément de chauffage par la surface (16) et l'enveloppe isolante (10).

3. Dispositif suivant l'une des revendications 1 et 2, caractérisé en ce que le fond (12) de l'enveloppe isolante de la cuve montable (20) est pourvu d'un évidement (13) pour une ouverture d'écoulement (7) de la cuve de filtrage.

4. Dispositif suivant l'une des revendications 1 à 3, caractérisé en ce que l'enveloppe isolante (10) présente une rainure annulaire (9) destinée à recouvrir un bourrelet annulaire (5) de la cuve de filtrage (1).

5. Dispositif suivant l'une des revendications 1 à 4, caractérisé en ce que l'enveloppe isolante (10) est constituée d'une mousse synthétique.

6. Dispositif suivant l'une des revendications 1 à 5, caractérisé en ce que la cuve montable (20) est formée d'au moins deux coques en forme de segments (21, 22) séparées le long de génératrices et reliables l'une à l'autre.

7. Dispositif suivant la revendication 6, caractérisé en ce que les coques en forme de segments (21, 22) peuvent être serrées sur la cuve de filtrage (1) au moyen d'agencements de rubans.

8. Dispositif suivant l'une des revendications 6 et 7, caractérisé en ce que les coques en forme de segments (21, 22) sont retenues sur la cuve de filtrage au moyen de bandes annulaires (25, 26).

Fig.1

Fig.2